# DEMANDE DE BREVET EUROPEEN

(11) **EP 1 300 898 A2**
(43) Date de publication de la demande: **09.04.2003**
(21) Numéro de dépôt: 02292436.9
(22) Date de dépôt: 03.10.2002
(51) Int. Cl.: H01M 4/32, H01M 4/52

(54) **Matiere electrochimiquement active pour electrode**

(30) Priorité: 08.10.2001 FR 0112908
(71) Demandeur: ALCATEL, 75008 Paris (FR)
(72) Inventeur: Bernard, Patrick, 33000 Bordeaux (FR)
(74) Mandataire: Sciaux, Edmond

(57) **Abrégé**

L'invention a pour objet une matière électrochimiquement active pour électrode positive de générateur secondaire à électrolyte alcalin constituée de particules monophasées d'un hydroxyde de structure cristallographique α contenant principalement du nickel, caractérisée en ce que la masse volumique apparente dudit hydroxyde de structure α est supérieure ou égale à 1,75 g/cm³.

De préférence, l'hydroxyde de nickel contient au moins un élément syncristallisés choisi parmi le cobalt et le manganèse. De préférence encore il contient en outre au moins un élément syncristallisés choisi parmi l'aluminium, le fer, l'yttrium, le manganèse et le chrome.

La présente invention a aussi pour objet une électrode positive de générateur secondaire à électrolyte alcalin contenant cette matière électrochimiquement active.

La présente invention a encore pour objet un procédé de fabrication de cette matière active.

## Description

La présente invention se rapporte à une matière électrochimiquement active pour électrode de type empâté ou plastifié, en particulier pour une électrode positive à base de nickel de générateur électrochimique secondaire à électrolyte alcalin. La présente invention se rapporte plus précisément à une matière électrochimiquement active constituée d'un hydroxyde de nickel de structure cristallographique de type α (α-Ni(OH)₂).
Une électrode dite empâtée ou plastifiée se compose d'un support servant de collecteur de courant sur lequel on enduit une pâte contenant la matière électrochimiquement active et un liant, auquel on ajoute le plus souvent un matériau conducteur. Elle est traditionnellement réalisée par dépôt de la pâte sur un support conducteur bidimensionnel (type plastifié) ou le plus souvent dans un support conducteur tridimensionnel poreux (type empâté) comme un feutre ou une mousse, métallique ou en carbone.
Dans le cas d'une électrode à base d'hydroxyde de nickel, les modifications structurales intervenant lors du cyclage ont été explicitée par BODE et al. (Electrochemica Acta, 11 (1966) 1079) sous la forme d'un diagramme mettant en jeu les phases α^{II}, β^{II}, β^{III} et γ^{III} dont la structure est bien connue des cristallographes:

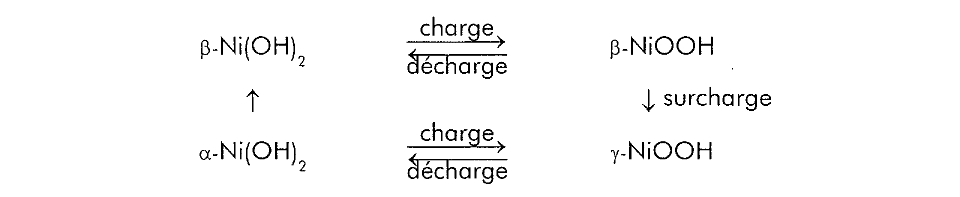

L'hydroxyde de nickel utilisé, le plus souvent sous forme de particules sphériques, dans l'ensemble des batteries commercialisées dans l'art actuel est un hydroxyde de nickel de structure cristallographique de type β (β-Ni(OH)₂) qui se transforme majoritairement en oxyhydroxyde β-NiOOH par simple déprotonation lors de la charge de l'électrode. L'hydroxyde de nickel peut contenir une proportion mineure d'hydroxyde d'un ou plusieurs autres métaux syncristallisés qui ne modifie pas sa structure cristalline. Le document DE-44 29 273 décrit un hydroxyde de nickel de type β-Ni(OH)₂ contenant du zinc et du cobalt syncristallisés.

L'hydroxyde de nickel étant peu conducteur, on lui associe habituellement un matériau conducteur, comme un composé du cobalt tel que le cobalt métallique, un hydroxyde de cobalt et/ou un oxyde de cobalt. Par exemple le brevet US-6,040,007 décrit un procédé de fabrication d'un hydroxyde de nickel sphérique de densité élevée. La matière active d'électrode positive est un hydroxyde de nickel recouvert d'hydroxyde de cobalt. Lorsque l'hydroxyde de nickel est recouvert d'hydroxyde de cobalt de type α, la masse volumique apparente de la matière active est d'au moins 1,6g/cm³. Lorsque l'hydroxyde de nickel est recouvert d'hydroxyde de cobalt de type β, la masse volumique apparente de la matière active est d'au moins 1,9g/cm³. La surface spécifique de la matière active est inférieure à 0,5m²/g.

La phase α-Ni(OH)₂, qui peut être obtenue par dépôt cathodique ou tout autre procédé, a l'intérêt de posséder une conductivité bien plus élevée que la phase β-Ni(OH)₂. Cependant elle se transforme spontanément en β-Ni(OH)₂ dans le milieu aqueux alcalin. Il a donc été nécessaire de modifier sa composition chimique pour la stabiliser par l'ajout de dopants tels que l'aluminium, le fer, le cobalt, l'yttrium, le chrome, le manganèse.
Par exemple, dans le document EP-0 952 621, est divulguée une matière active pour accumulateur alcalin constituée d'un hydroxyde de nickel de type α contenant 8 à 60% molaire de manganèse.
Le document EP-0 975 036 divulgue une matière active d'électrode positive d'accumulateur alcalin étanche constituée d'un oxyhydroxyde de nickel incluant du manganèse en solution solide dans lequel le taux de la phase γ-NiOOH est de 65 à 100% et celui de phase α-Ni(OH)₂ de 40 à 0%, mesuré par le rapport des surfaces de pic de diffraction X.
Le document EP-1 027 742 décrit une matière active à base d'un hydroxyde de nickel de phase α de formule : [(Ni²⁺)_{(1-x-y)}(A^{m+})ₓBⁿ⁺)_{y}(OH⁻)₂]⁺ dans laquelle A peut être du cobalt ou du manganèse et B peut être de l'yttrium.

Le but de l'invention est d'augmenter simultanément l'énergie massique et volumique d'une électrode dont la matière électrochimiquement active est un hydroxyde constitué principalement de nickel.

L'invention a donc pour objet une matière électrochimiquement active pour électrode positive de générateur secondaire à électrolyte alcalin, constituée de particules monophasées d'un hydroxyde de structure cristallographique α contenant principalement du nickel, caractérisée en ce que la masse volumique apparente dudit hydroxyde est supérieure ou égale à 1,75g/cm³.

Dans ce qui précède et dans ce qui suit, la « masse volumique apparente » est mesurée par la méthode dite de la densité tapée dont les conditions sont définies dans la norme ASTM-B527.
Il est bien entendu que le terme "hydroxyde contenant principalement du nickel" utilisé dans la présente demande peut signifier un hydroxyde de nickel, mais également un hydroxyde de nickel contenant en outre une faible proportion d'au moins un hydroxyde syncristallisé d'un autre élément. Un hydroxyde syncristallisé contenu dans l'hydroxyde de nickel est un hydroxyde formant une solution solide avec l'hydroxyde de nickel, i.e. occupant, en proportion continûment variable, les sites atomiques définis par le réseau cristallin de l'hydroxyde de nickel. L'hydroxyde obtenu ne comporte qu'une seule phase cristalline.
Selon un mode de réalisation préféré, l'hydroxyde contenant principalement du nickel contient en outre, en proportion minoritaire, un hydroxyde syncristallisé d'au moins un autre élément.
Selon une première variante, l'hydroxyde contenant principalement du nickel contient en outre, en proportion minoritaire, un premier hydroxyde syncristallisé d'au moins un élément choisi parmi le cobalt Co et le manganèse Mn.
Selon une deuxième variante, l'hydroxyde contenant principalement du de nickel contient en outre, en proportion minoritaire, un deuxième hydroxyde syncristallisé d'au moins un élément choisi parmi l'aluminium Al, le fer Fe, l'yttrium Y, le manganèse Mn et le chrome Cr.
De préférence la proportion totale desdits éléments syncristallisés par rapport au nickel est inférieure à 30% en poids, et de préférence comprise entre 13 et 30% en poids.
Avantageusement, l'hydroxyde de nickel contient au moins un anion choisi parmi les carbonates CO₃⁼, les sulfates SO₄⁼ et les nitrates NO₃⁻.
De préférence, la surface spécifique de l'hydroxyde de nickel est comprise entre 2 et 30m²/g.

L'hydroxyde à base de nickel de structure cristalline α selon l'invention est préparé par précipitation d'au moins un sel de nickel dans une solution alcaline et/ou ammoniacale fortement concentrée.

De préférence ladite solution alcaline et/ou ammoniacale est à une température supérieure à la température ambiante.
Dans le cas où l'on utilise un hydroxyde à base de nickel contenant des éléments dopants syncristallisés, on mettra en oeuvre un mélange du sel de nickel et de sels des éléments à syncristalliser. Selon cette variante, on précipite en outre simultanément audit sel de nickel au moins un sel d'un élément choisi parmi d'une part le cobalt et le manganèse, et d'autre part l'aluminium, le fer, l'yttrium, le manganèse et le chrome.
Avantageusement ledit sel est en solution aqueuse.
De préférence ledit sel est choisi parmi les carbonates, les sulfates et les nitrates, et de préférence encore ledit sel est un sulfate.
Selon un mode de réalisation particulier, ladite solution de sel contient en outre un oxydant.

L'invention a aussi pour objet une électrode positive de générateur secondaire à électrolyte alcalin dont la matière électrochimiquement active est constituée principalement d'un hydroxyde contenant principalement du nickel de structure cristallographique α dont la masse volumique apparente est supérieure ou égale à 1,75g/cm³.

L'invention a encore pour objet un procédé de fabrication d'une matière active comprenant la précipitation d'au moins un sel de nickel dans une solution alcaline et/ou ammoniacale fortement concentrée, à une température supérieure à la température ambiante.
Selon une première variante, on précipite, simultanément au sel de nickel, au moins un premier sel d'au moins un autre élément choisi parmi le cobalt et le manganèse.
Selon une deuxième variante, on précipite en outre, simultanément au sel de nickel, un deuxième sel d'au moins un autre élément choisi parmi l'aluminium, le fer, l'yttrium, le manganèse et le chrome.
De préférence le sel est en solution aqueuse.
De préférence encore le sel est choisi parmi les carbonates, les sulfates et les nitrates.
La solution de sel peut contenir en outre un oxydant.

### EXEMPLE 1

Une matière active selon la présente invention est fabriquée de la manière suivante. On prépare une solution aqueuse d'un mélange de sulfate de nickel, de sulfate de cobalt et de sulfate d'aluminium dans laquelle on ajoute un oxydant, par exemple H₂O₂.Par ailleurs une solution concentrée d'un mélange d'hydroxyde de potassium KOH, de carbonate de potassium KCO₃ et d'ammoniaque est chauffée et agitée. On y ajoute la solution aqueuse de sels. Le précipité obtenu est ensuite lavé, filtré, puis séché sous vide pendant 24 heures à 50°C. On obtient ainsi un hydroxyde à base de nickel de structure cristallographique α contenant du cobalt et de l'aluminium.

Une électrode positive A conforme à l'invention est réalisée avec une pâte ayant comme composition pondérale (exprimée en % par rapport au poids de la pâte) :

| | |
|---|---|
| matière électrochimiquement active | 92,7% |
| matériau conducteur oxyde de cobalt CoO | 8% |
| liant PTFE | 1% |
| épaississant HPMC | 0,3% |

La matière électrochimiquement active pulvérulente est constituée d'un hydroxyde à base de nickel de structure α contenant 15% d'aluminium et 6% de cobalt syncristallisés, et dont la masse volumique apparente est de 1,77g/cm3. La matière électrochimiquement active pulvérulente contient des anions carbonates. Sa surface développée est de 10m²/g. Le liant est du polytétrafluoroéthylène (PTFE). L'épaississant est le sel de sodium de l'hydroxypropyle methylcellulose (HPMC). La viscosité de la pâte est ajustée avec de l'eau. La pâte est introduite dans le support conducteur servant de collecteur de courant qui est une mousse de nickel de porosité environ 95%. Une fois la pâte introduite dans le support, l'ensemble est séché afin d'en éliminer l'eau, puis laminé pour obtenir l'électrode à l'épaisseur désirée.

### EXEMPLE 2

Une électrode positive de référence B est réalisée avec une pâte ayant comme composition pondérale (exprimée en % par rapport au poids de la pâte) :

| | |
|---|---|
| matière électrochimiquement active | 92,7% |
| matériau conducteur CoO | 8% |
| liant PTFE | 1% |
| épaississant HPMC | 0,3% |

La matière électrochimiquement active pulvérulente est constituée d'un hydroxyde à base de nickel de structure cristalline β comprenant 2% de cobalt et 3% de zinc syncristallisé. Le liant est du polytétrafluoroéthylène (PTFE). L'épaississant est le sel de sodium de l'hydroxypropyle methylcellulose (HPMC). La viscosité de la pâte est ajustée avec de l'eau. La pâte est introduite dans le support conducteur servant de collecteur de courant qui est une mousse de nickel de porosité environ 95%. Une fois la pâte introduite dans le support, l'ensemble est séché afin d'en éliminer l'eau, puis laminé pour obtenir l'électrode à l'épaisseur désirée.

### EXEMPLE 3

Une électrode positive de comparaison C est réalisée avec une pâte ayant comme composition pondérale (exprimée en % par rapport au poids de la pâte) :

| | |
|---|---|
| matière électrochimiquement active | 92,7% |
| matériau conducteur CoO | 8% |
| liant PTFE | 1% |
| épaississant HPMC | 0,3% |

La matière électrochimiquement active pulvérulente est constituée d'un hydroxyde à base de nickel de structure α comprenant 17% d'aluminium, 5% de cobalt et dont la masse volumique apparente est de 1,34g/cm³. La matière électrochimiquement active pulvérulente contient des anions carbonates. Sa surface développée est de 48m2/g. Le liant est du polytétrafluoroéthylène (PTFE). L'épaississant est le sel de sodium de l'hydroxypropyle methylcellulose (HPMC). La viscosité de la pâte est ajustée avec de l'eau. La pâte est introduite dans le support conducteur servant de collecteur de courant qui est une mousse de nickel de porosité environ 95%. Une fois la pâte introduite dans le support, l'ensemble est séchée afin d'en éliminer l'eau, puis laminé pour obtenir l'électrode à l'épaisseur désirée.

Un test comparatif de rendement est ci-après décrit. Dans ce test, sont comparés le mode de réalisation conforme à l'invention (accumulateur A), une électrode de référence selon l'art antérieur dont la matière électrochimiquement active pulvérulente est constituée d'un hydroxyde à base de nickel de structure β (accumulateur B), une électrode de comparaison dont la matière électrochimiquement active est constituée de nickel de structure α de masse volumique apparente inférieur à 1,75g/cm³ (accumulateur C).

Un générateur électrochimique secondaire étanche nickel-métal hydrurable Ni-MH cylindrique de format A (norme CEI 285) et dont la capacité nominale Cn est de 1500mAh est fabriqué de la manière suivante. L'électrode négative de type connu possède comme matière électrochimiquement active un composé intermétallique capable de former un hydrure MH une fois chargé. Sa capacité est supérieure à celle de l'électrode positive. Chaque électrode positive est accolée à une électrode négative dont elle est isolée par un séparateur constitué d'un non-tissé de polypropylène pour former le faisceau électrochimique. Le faisceau spiralé est inséré dans un godet métallique et imprégné d'un électrolyte alcalin qui est une solution alcaline aqueuse constituée d'un mélange d'hydroxyde de potassium KOH 7,5N, d'hydroxyde de lithium LiOH 0,5N et d'hydroxyde de sodium NaOH 0,4N. De la manière qui vient d'être décrite, on réalise les accumulateurs A, B et C.

Après un repos de 48 heures, les accumulateurs subissent une formation électrique dans les conditions suivantes:
Repos de 2 heures à une température de 80°C,
   Cycle 1 :
      - charge à un régime de 0.1 lc pendant 8 heures à 80°C, où lc est le courant nécessaire pour décharger la capacité nominale C du générateur en 1 heure,
      - repos de 4 heures à 20°C,
      - charge de 3 heures à un régime de 0.33 lc,
      - décharge à un régime de 0,66 lc pendant 1 heure,
      - charge de 1 heure à un régime de lc et 1h 12mn à un régime de 0.5 lc
      - décharge à un régime de 0.2 lc jusqu'à une tension d'arrêt de 0.9 Volt ;
   Cycles 2 à 10 :
      - charge à un régime de 0.1 lc pendant 16 heures à 20°C,
      - décharge à un régime de 0.2 lc jusqu'à une tension d'arrêt de 0.9 Volt.

Les performances électriques des accumulateurs A, B et C sont regroupées dans le tableau 1 ci-dessous :

**TABLEAU 1**

| Accumulateur | A | B | C |
|---|---|---|---|
| Rendement massique de l'électrode positive au cycle 10 (mAh/g) | 274 | 255 | 323 |
| Rendement volumique de l'électrode positive au cycle 10 (mAh/cm³) | 669 | 655 | 526 |

On comprend d'après ces résultats que l'accumulateur A selon l'invention présente des performances supérieures à l'accumulateur de référence B autant en terme d'énergie volumique (+2,1%) que d'énergie massique (+7,5%). Son énergie volumique est en outre très supérieure à celle de l'accumulateur C (+27,2%). L'accumulateur C présente une énergie massique améliorée par rapport à celle de l'accumulateur B (+26,7%), mais son rendement volumique est plus faible (-19,7%).

## Revendications

1. Matière électrochimiquement active pour électrode positive de générateur secondaire à électrolyte alcalin, constituée de particules monophasées d'un hydroxyde de structure cristallographique α contenant principalement du nickel, **caractérisée en ce que** la masse volumique apparente dudit hydroxyde de structure α est supérieure ou égale à 1,75g/cm³.

2. Matière active selon la revendication 1, dans laquelle l'hydroxyde contenant principalement du nickel contient en outre, en proportion minoritaire, un hydroxyde syncristallisé d'au moins un autre élément.

3. Matière active selon la revendication 2, dans laquelle l'hydroxyde contenant principalement du nickel contient en outre, en proportion minoritaire, un premier hydroxyde syncristallisé d'au moins un élément choisi parmi le cobalt et le manganèse.

4. Matière active selon l'une des revendications 2 et 3, dans laquelle l'hydroxyde contenant principalement du nickel contient en outre, en proportion minoritaire, un deuxième hydroxyde syncristallisé d'au moins un élément choisi parmi l'aluminium, le fer, l'yttrium, le manganèse et le chrome.

5. Matière active selon l'une des revendications 2 à 4, dans laquelle la proportion totale desdits éléments syncristallisés par rapport au nickel est comprise entre 13 et 30% en poids.

6. Matière active selon l'une des revendications précédentes, dans laquelle l'hydroxyde contenant principalement du nickel contient au moins un anion choisi parmi les carbonates, les sulfates et les nitrates.

7. Matière active selon l'une des revendications précédentes, dans laquelle la surface spécifique de l'hydroxyde contenant principalement du nickel est comprise entre 2 et 30m²/g.

8. Electrode positive de générateur secondaire à électrolyte alcalin contenant une matière électrochimiquement active selon l'une des revendications précédentes.

9. Procédé de fabrication d'une matière active selon l'une des revendications 1 à 7, comprenant la précipitation d'au moins un sel de nickel dans une solution alcaline et/ou ammoniacale fortement concentrée, à une température supérieure à la température ambiante.

10. Procédé selon la revendication 9, dans lequel on précipite, simultanément audit sel de nickel, un premier sel d'au moins un autre élément choisi parmi le cobalt et le manganèse.

11. Procédé selon l'une des revendications 9 et 10, dans lequel on précipite en outre, simultanément audit sel de nickel, un deuxième sel d'au moins un autre élément choisi parmi l'aluminium, le fer, l'yttrium, le manganèse et le chrome.

12. Procédé selon l'une des revendications 9 à 11, dans lequel ledit sel est en solution aqueuse.

13. Procédé selon l'une des revendications 9 à 12, dans lequel ledit sel est choisi parmi les carbonates, les sulfates et les nitrates.

14. Procédé selon l'une des revendications 9 à 13, dans lequel ladite solution de sel contient en outre un oxydant.
